# FASCICULE DE BREVET EUROPEEN

(11) **EP 0 995 260 B1**
(45) Date de publication et mention de la délivrance du brevet: **22.12.2004**
(21) Numéro de dépôt: 98925347.1
(22) Date de dépôt: 10.06.1998
(51) Int. Cl.: H02P 7/62, G01M 7/00, G01M 17/00, G01H 1/00, B06B 1/04

(54) **SYSTEME MOTORISE ELECTRIQUE ROTATIF APTE A VIBRER ET UNE METHODE POUR FAIRE FONCTIONNER UN MOTEUR ELECTRIQUE ROTATIF APTE A VIBRER**
ROTIERENDES ELEKTROMOTORISCHES SYSTEM MIT SCHWINGUNGSFÄHIGKEIT UND VERFAHREN ZUM BETRIEB EINES ROTIERENDEN ELEKTROMOTORS MIT SCHWINGUNGSFÄHIGKEIT
ROTATING ELECTRIC MOTOR SYSTEM CAPABLE OF VIBRATING AND METHOD FOR OPERATING A ROTATING ELECTRIC MOTOR CAPABLE OF VIBRATING

(30) Priorité: 16.06.1997 CA 2208499
(43) Date de publication de la demande: 26.04.2000
(73) Titulaire: HYDRO QUEBEC, Montréal H2Z 1A4, Québec (CA)
(72) Inventeur: LAMBERT, Ghislain, Beloeil, Québec J3G 6H5 (CA); PRONOVOST, Christian, Longueuil, Québec J4G 2C4 (CA); FRANCOEUR, Bruno, Beloeil, Québec J3G 6M1 (CA); COUTURE, Pierre, Boucherville, Québec J4B 4A4 (CA)
(74) Mandataire: Thébault, Jean-Louis
(86) Numéro de dépôt international: PCT/CA1998/000483
(87) Numéro de publication internationale: WO 1998/058446

(56) Documents cités:
- EP-A- 0 671 620
- DE-A- 4 104 961
- DE-A- 19 531 402
- GB-A- 2 197 473
- PATENT ABSTRACTS OF JAPAN vol. 096, no. 009, 30 septembre 1996 -& JP 08 137555 A (SHINKO ELECTRIC CO LTD), 31 mai 1996
- PATENT ABSTRACTS OF JAPAN vol. 014, no. 263 (E-0938), 7 juin 1990 -& JP 02 079800 A (MATSUSHITA ELECTRIC WORKS LTD), 20 mars 1990

## Description

### Champ de l'invention:

La présente invention concerne un système motorisé électrique rotatif apte à vibrer et une méthode pour faire fonctionner un moteur électrique rotatif apte à vibrer ayant un rotor et un stator. Le rotor et le stator formant une unité apte à vibrer permettant des vibrations mécaniques.

### Art antérieur:

Il existe dans l'art antérieur le document JP 08 137555 A (Shinko Electric Co. Ltd) du 31 mai 1996. Ce document propose un système de contrôle de vibration pour moteur en remplacement des systèmes de contrôle de vibration de l'art antérieur qui nécessitaient l'utilisation d'un vibrateur à pression d'huile. Le contrôle du moteur se fait par une première boucle de commande soit une boucle de commande de vitesse. Ce document propose aussi une deuxième boucle de commande soit une boucle de commande de vibration. Enfin, ce document précise que la réponse en fréquence de la boucle de commande de vitesse est réglée à une valeur assez faible par rapport au signal F qui contrôle la fréquence de vibration. Ainsi, le moteur est contrôlé, d'une part, par la première boucle pour tourner à la vitesse N, et, d'autre part, par la deuxième boucle pour vibrer à la fréquence F selon une amplitude ΔN.

Il existe également dans l'art antérieur le brevet américain No. 5,191,618 de HISEY, Bradner L. dans lequel est décrit un appareil rotatif pour reproduire des signaux basse-fréquence et une méthode. L'appareil comprend un radiateur acoustique rotatif comprenant une enceinte ayant une paroi latérale cylindrique et des parois d'extrémité formant ensemble une chambre cylindrique. Un moteur est prévu pour faire tourner un rotor selon un mouvement rotatif et alternatif. L'appareil décrit dans ce brevet est capable de reproduire des sons avec très peu de distorsions à partir d'une fréquence de 80 Hertz jusqu'à une fréquence plus basse aux environs de 20 Hertz de la gamme de fréquences audibles.

Il existe également dans l'art antérieur le brevet japonais No. 63-138230 qui décrit un dispositif d'analyse de vibrations pour automobile. L'objectif de cette invention est d'effectuer une évaluation des composantes d'une automobile en soumettant celle-ci à des vibrations. Pour faire une telle évaluation, les roues avant et arrière de l'automobile sont placées sur des rouleaux et l'automobile est mise en marche. Un signal de vibrations est détecté et analysé pour permettre l'évaluation des composantes de l'automobile.

Il existe également dans l'art antérieur le brevet américain No. 3,677,077 de MERRYMAN, George B. dans lequel est décrit un système d'évaluation de vibrations qui permet d'évaluer les différentes vibrations d'un véhicule en mouvement. Ce système est caractérisé par une pluralité de conducteurs électriques bobinés. Des courants sont mesurés dans les conducteurs et permettent de donner une indication de l'amplitude des vibrations du véhicule.

Il existe également dans l'art antérieur le brevet américain No. 4,988,979 de SASAKI, Hiroaki et al. dans lequel est décrit un système d'inspection de machines rotatives. D'abord, la vitesse de rotation où un paramètre physique relié à la machine rotative est détecté et un premier signal correspondant est produit. Ensuite, une pression sonore ou une vibration mécanique produite par la machine rotative est détectée et un second signal correspondant est produit. À partir de ces deux signaux, une évaluation de la machine rotative est effectuée.

Les brevets et document suivants sont également connus dans l'art antérieur:

### Brevets américains Nos.:

4,327,518
4,522,347
4,564,727
4,970,909
4,997,404
5,109,715
5,191,618
5,297,757
3,677,077
3,844,175
3,913,084
4,377,947
4,402,527
4,793,186
4,884,449
4,913,084
4,988,979
5,029,477
5,062,296
5,216,921
5,245,664
5,265,831

### Publication:

The Soviet Journal of Nondestructive
Testing (Trans. of Defektoskopiya),
Vol. 10, No. 3, pages 301-307,
May-June, 1974 (publ. Mar 1975)

### Brevets japonais Nos.:

63-138230
1-180425
3-68834
56-6181
57-538
63-088410

### Brevet britannique No.:

2,201,777

### Brevets russes Nos.:

241,803
368,540

Aucun des brevets ou document mentionnés ci-dessus ne propose une machine rotative ni une méthode pour faire fonctionner une machine rotative apte à vibrer où la machine peut vibrer dans une gamme de fréquences audibles indépendamment du fait qu'elle est ou non en rotation.

Un objet de la présente invention est de proposer un système motorisé électrique rotatif apte à vibrer et une méthode pour faire fonctionner un moteur électrique rotatif apte à vibrer où le moteur électrique peut vibrer selon une gamme de fréquences audibles indépendamment du fait qu'il est ou non en rotation.

Selon la présente invention, il est prévu un système motorisé électrique rotatif apte à vibrer suivant la revendication 1.

Selon la présente invention, il est également prévu une méthode pour faire fonctionner un moteur électrique rotatif apte à vibrer suivant la revendication 4.

Les autres objets, avantages et autres caractéristiques de la présente invention deviendront plus apparents à la lecture de la description non restrictive qui suit de modes de réalisation préférentiels décrits en référence aux dessins.

### Brève description des dessins:

La figure 1 est un schéma bloc montrant le système motorisé électrique rotatif apte à vibrer selon un premier mode de réalisation de la présente invention;
Les figures 2A, 2B et 2C sont un diagramme bloc montrant avec plus de détails une partie du système montrée à la figure 1;
La figure 3 est un diagramme de circuit montrant avec plus de détails une autre partie du système montrée à la figure 1;
La figure 4 est un diagramme bloc montrant un système motorisé électrique rotatif apte à vibrer selon un deuxième mode de réalisation de la présente invention;
La figure 5 est une vue de côté partiellement en coupe d'un moteur-roue électrique connu dans l'art antérieur; et
La figure 6 est une vue de devant partiellement en coupe du rotor et du stator du moteur-roue électrique montré dans la figure 5.

### Description détaillée des figures:

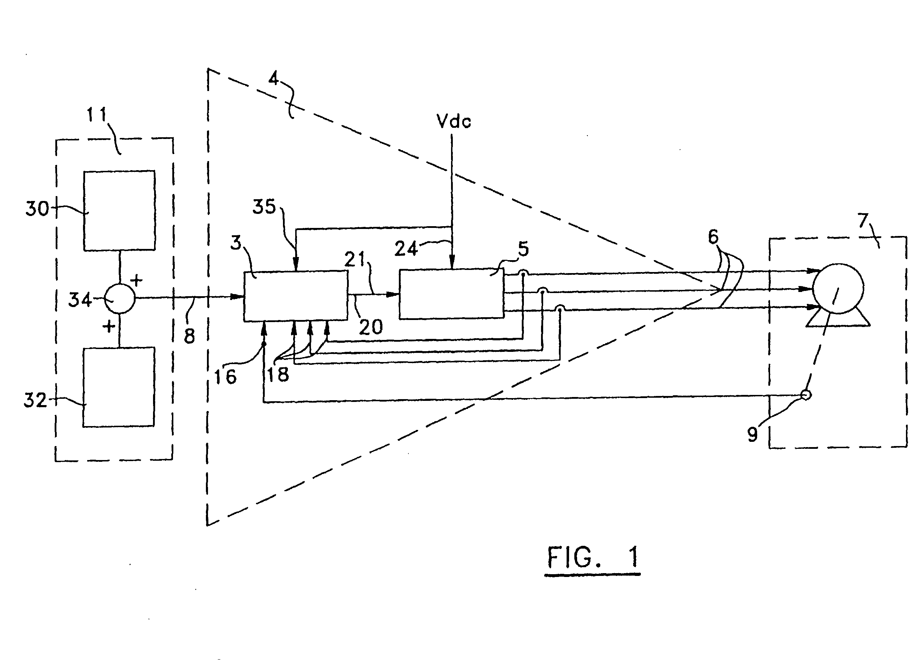

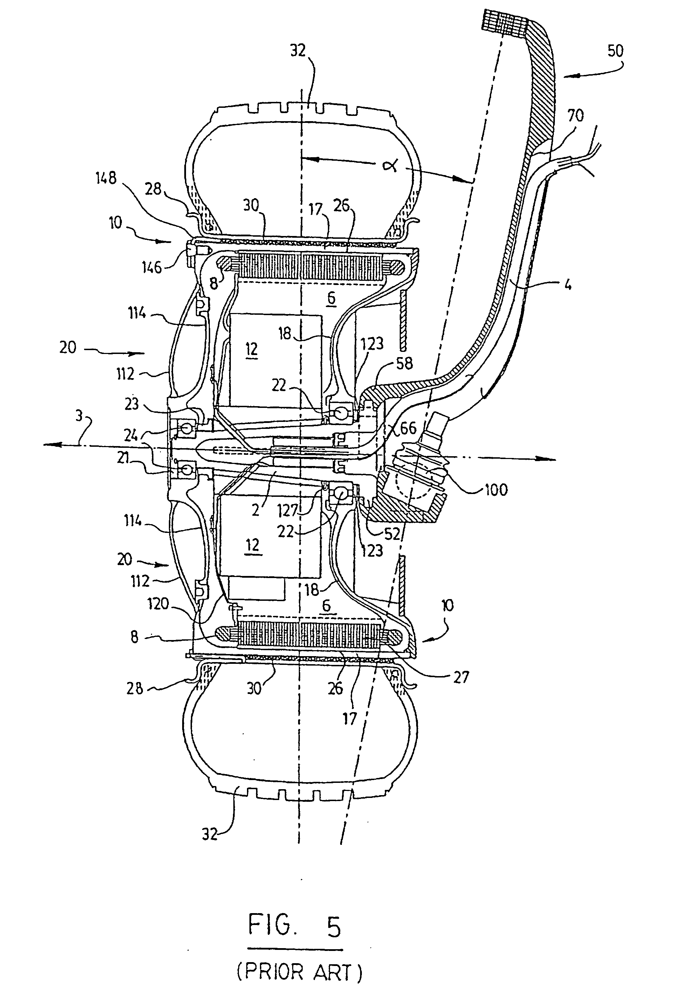

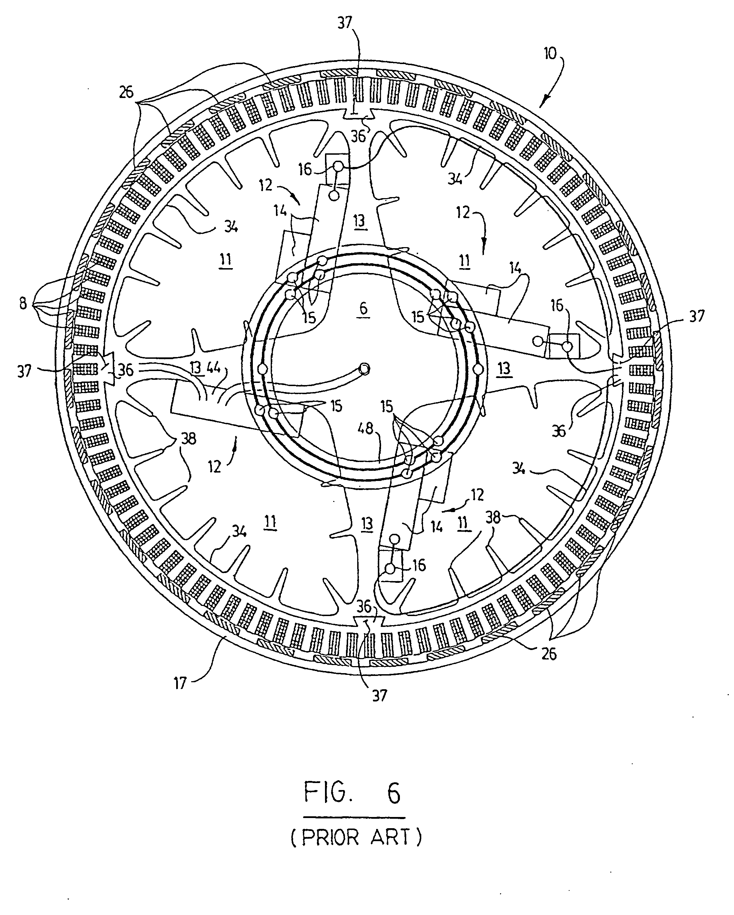

Si l'on se réfère maintenant à la figure 1, on peut voir un système motorisé électrique rotatif apte à vibrer selon la présente invention. Il comprend un moteur électrique 7 ayant un rotor et un stator. Le moteur électrique sera décrit avec plus de détails lorsque nous ferons référence aux figures 5 et 6. Le moteur électrique est de préférence un moteur-roue électrique synchrone à aimants permanents. Le rotor et le stator forment une unité apte à vibrer ayant une première bande passante permettant des vibrations mécaniques à l'intérieur d'une gamme de fréquences audibles. Un amplificateur de puissance 4 est prévu pour alimenter le moteur électrique 7. Cet amplificateur de puissance a une sortie de puissance 6 branchée au moteur électrique 7 et une entrée de signal de contrôle 8 pour recevoir un signal de contrôle. L'amplificateur de puissance 4 a une seconde bande passante incluant au moins la première bande passante.

Un générateur de signal 11 est prévu pour générer le signal de contrôle. Le générateur de signal 11 a une troisième bande passante incluant au moins la première bande passante. Le signal de contrôle a une composante continue pour faire tourner le rotor par rapport au stator, et une composante alternative pour induire des vibrations mécaniques dans l'unité apte à vibrer à l'intérieur d'une gamme de fréquences audibles. Le générateur de signal 11 comprend un générateur de signal audio 30 pour générer une composante alternative qui fera vibrer l'unité composée du rotor et du stator du moteur électrique 7. Un générateur de signal de commande 32 est également prévu pour générer une composante continue qui induira une rotation du rotor par rapport au stator. Un additionneur 34 est prévu pour additionner le signal de sortie du générateur de signal audio 30 au signal de sortie du générateur de signal de commande 32 et produire un signal de contrôle qui sera appliqué à l'entrée de contrôle 8 de l'amplificateur de puissance 4.

L'amplificateur de puissance 4 comprend un régulateur de courant 3 et un convertisseur 5. Le moteur-roue électrique 7 est, de préférence, une machine synchrone triphasée à aimants permanents.

Le signal de sortie du générateur de signal 11 est envoyé au régulateur de courant 3. Le régulateur de courant 3 reçoit également via son entrée 16 un signal encodé de la position du rotor de la machine 7 de l'encodeur 9, via ses entrées 18 trois mesures de courant de la sortie 6, et via son entrée 35 le signal de l'alimentation de puissance Vdc. Chaque mesure de courant représente un courant circulant dans une des trois phases de la machine synchrone 7. Sur la base des signaux reçus par le régulateur de courant 3 via les entrées 8, 16, 18 et 35, celui-ci produit des signaux de modulation par impulsions de largeur variable PWMa, PWMb et PWMc à sa sortie 20 qui sont envoyés à l'entrée 21 du convertisseur 5.

Il est important de noter que la machine 7, le convertisseur 5 et le régulateur de courant 3 ont chacun une bande passante suffisante pour permettre le passage de fréquences audibles.

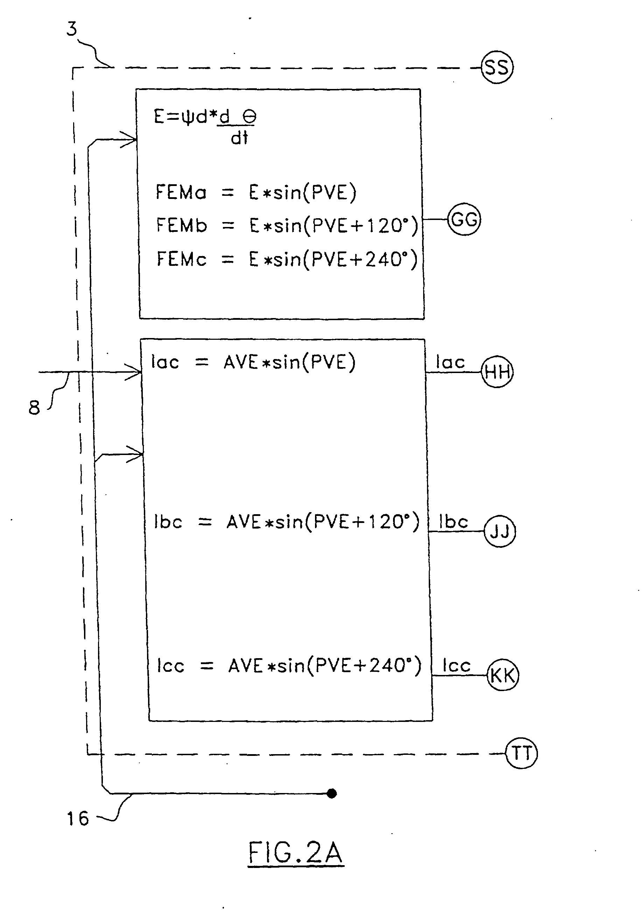

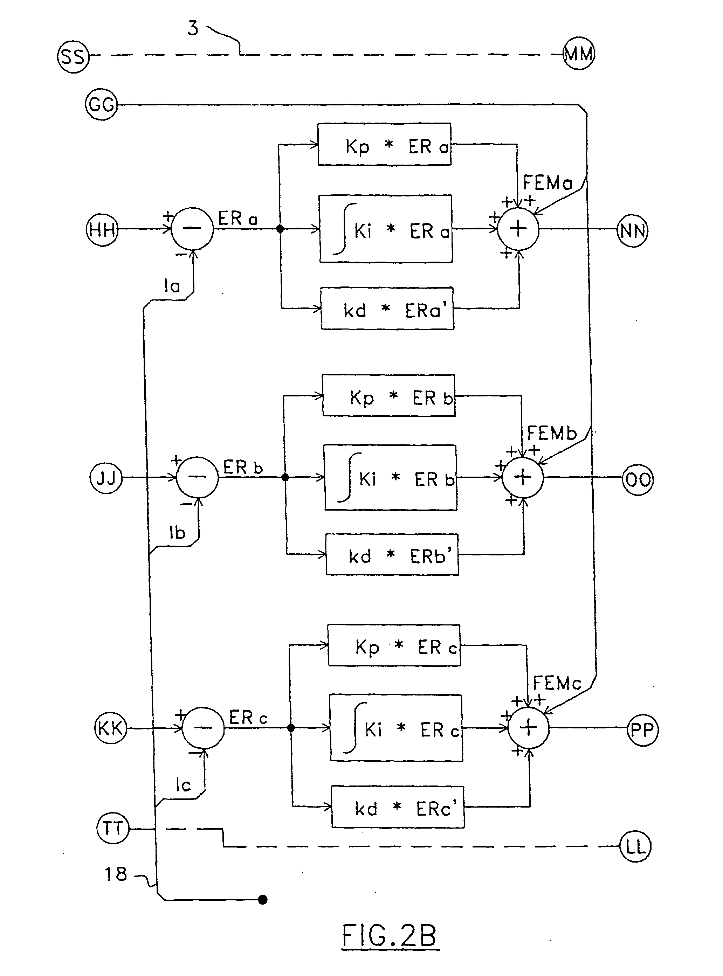

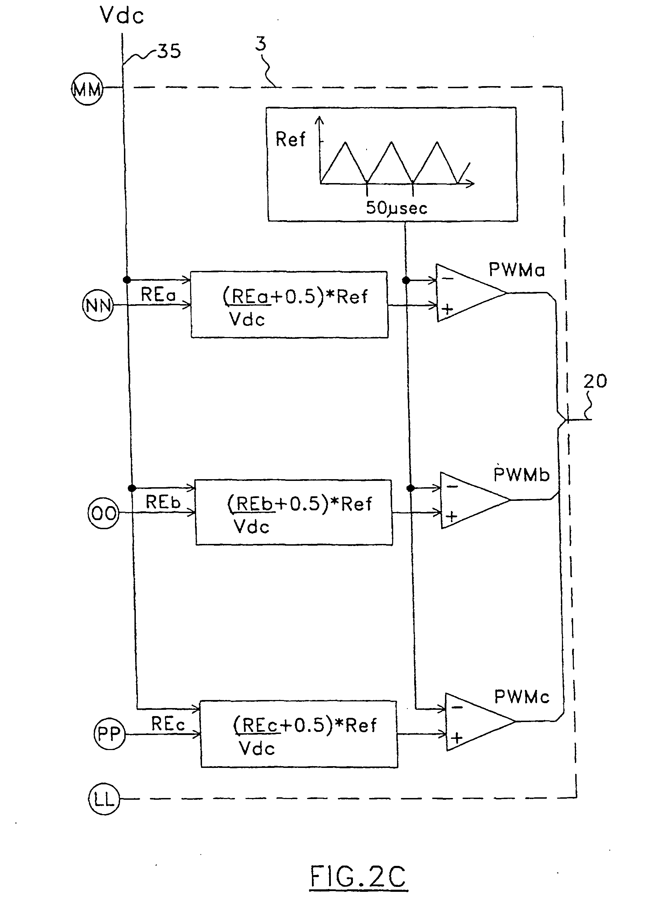

Si l'on se réfère maintenant aux figures 2A, 2B et 2C, on montre un mode de réalisation préférentiel du régulateur de courant 3 pour calculer les signaux PWMa, PWMb et PWMc qui sont appliqués au convertisseur 5 montré à la figure 1. Les valeurs de courant de commande Iac, Ibc et Icc sont calculées à partir des valeurs AVE et PVE dérivées des entrées 16 et 8. Les valeurs de force contre électromotrice FEMa, FEMb et FEMc sont calculées à partir des valeurs PVE, θ et ψd où ψd est une constante représentative de la force magnétomotrice. Les valeurs des erreurs ERa, ERb et ERc sont calculées à partir des valeurs de commande de courant Iac, Ibc et Icc et des valeurs des courants Ia, Ib et Ic. Les valeurs REa, REb et REc sont calculées au moyen d'un algorithme PID (Proportional Integral Differential) qui utilise les valeurs de FEMa, FEMb et FEMc. Les valeurs PWMa, PWMb et PWMc sont calculées à partir des valeurs de Vdc, REa, REb et REc et sont appliquées à la sortie 20.

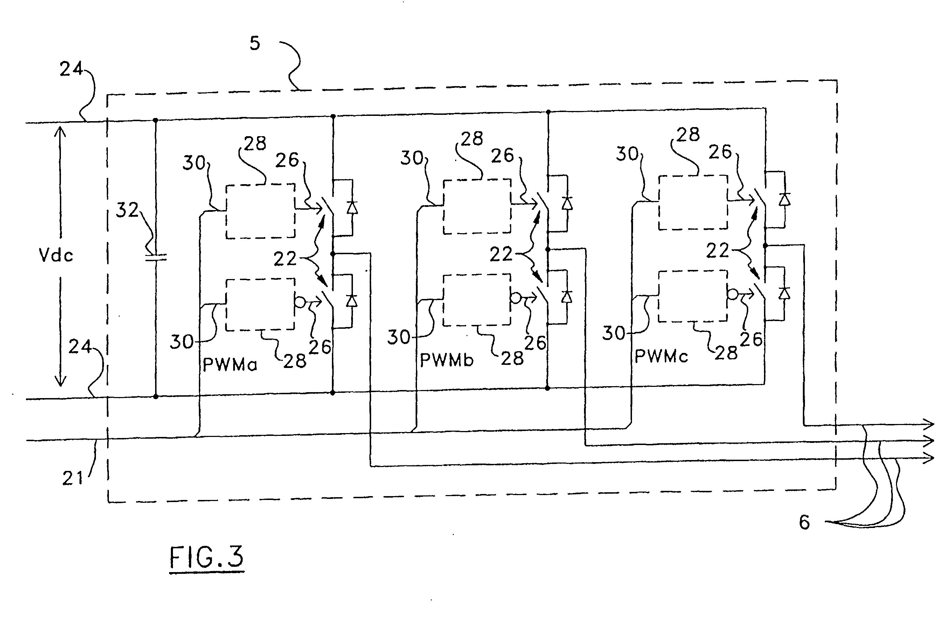

Si l'on se réfère maintenant à la figure 3, on montre un mode de réalisation préférentiel du convertisseur 5 montré à la figure 1. Ce convertisseur 5 est utilisé pour appliquer des courants d'alimentation au moteur électrique 7 montré à la figure 1 via les sorties 6. Six commutateurs de puissance 22 de type IGBT sont branchés à l'alimentation de puissance Vdc via l'entrée 24. Les commutateurs de puissance 22 ont des entrées 26 pour recevoir des signaux de commande à partir des sorties de circuit de commande 28. Les circuits de commande 28 ont des entrées 30 pour recevoir respectivement les signaux PWMa, PWMb et PWMc via l'entrée 21. Un condensateur de puissance 32 est branché en parallèle à l'entrée 24 pour filtrer l'alimentation de puissance Vdc, et est utilisé comme découplage du convertisseur 5.

Si l'on revient maintenant à la figure 1, le convertisseur 5 reçoit des signaux PWMa, PWMb et PWMc et les amplifie. Trois signaux de puissance sont envoyés à la machine 7 via les sorties 6 pour induire une rotation et une vibration de la machine 7 selon les signaux émis respectivement par les générateurs 32 et 30. Ainsi, il est possible par exemple de rendre le fonctionnement de la machine 7 audible en combinant un signal de fréquences audibles avec le signal de commande via l'additionneur 34.

La méthode pour faire fonctionner le moteur électrique rotatif apte à vibrer 7 comprend les étapes de (a) produire un signal de contrôle ayant une composante continue pour faire tourner le rotor par rapport au stator, et une composante alternative pour induire des vibrations mécaniques à l'intérieur d'une gamme de fréquences audibles dans l'unité composée du rotor et du stator du moteur électrique; (b) produire un signal d'alimentation en réponse au signal de contrôle produit à l'étape (a) pour alimenter le moteur électrique 7; et (c) alimenter le moteur électrique 7 avec le signal d'alimentation. Ainsi, en opération, le moteur électrique vibre en réponse à la composante alternative du signal de contrôle et le rotor tourne en réponse à la composante continue du signal de contrôle.

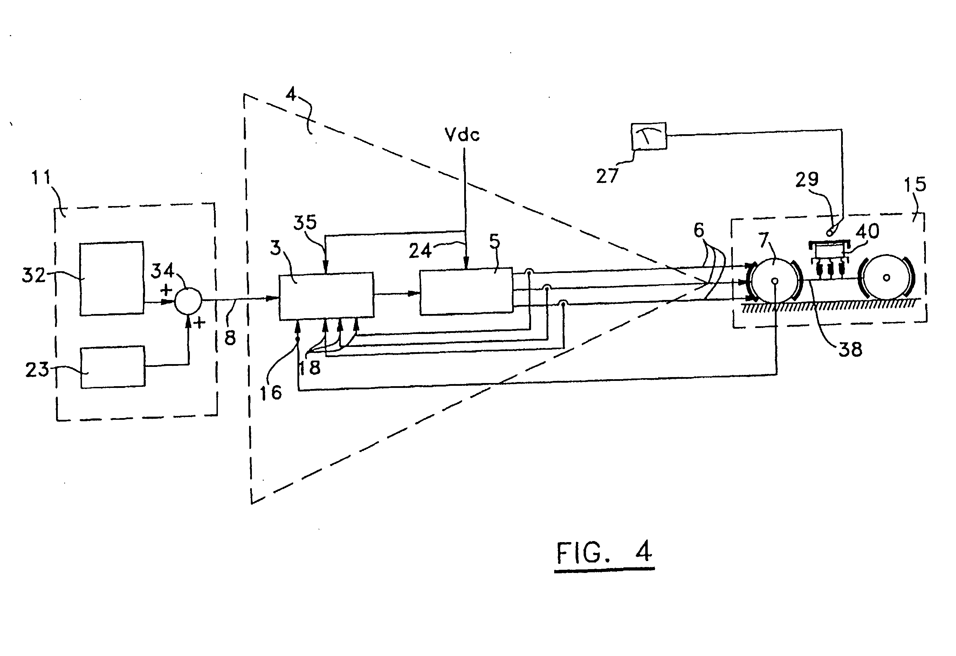

Si l'on se réfère maintenant à la figure 4, on montre un deuxième mode de réalisation de l'invention qui concerne un appareil et une méthode pour localiser un bruit dû à un problème de vibration non désirée dans un moteur-roue électrique 7 ou dans un véhicule muni d'au moins un moteur-roue électrique 7. Dans cette figure 4, les mêmes repères numériques que ceux apparaissant dans la figure 1 indiquent des éléments analogues. Normalement, pour déterminer l'origine d'un bruit dû à un problème de vibration non désirée, le mécanicien doit effectuer des essais de vibration sur différentes parties du moteur électrique ou du véhicule. Un objet de ce second mode de réalisation est de proposer un système et une méthode pour localiser facilement et précisément un bruit dû à une vibration non désirée.

Dans ce mode de réalisation, le générateur de signal 11 comprend un générateur de balayage 23 pour générer un signal de contrôle ayant une composante alternative de balayage pour réaliser un test de vibrations mécaniques sur le moteur électrique 7 ou sur l'armature 40 reliée au moteur électrique 7. Lorsque le test est réalisé sur l'armature 40 attachée au moteur électrique 7, un lien mécanique est bien sûr prévu pour relier le moteur électrique 7 à l'armature 40 pour que le test de vibrations mécaniques puisse être effectué sur l'armature. Bien sûr, lorsqu'il s'agit d'un véhicule électrique qui est déjà muni de moteurs-roues électriques tels que des moteurs électriques 7, un homme de l'art pourra facilement comprendre que l'automobile est déjà munie des moyens nécessaires pour réaliser un test selon la présente invention où les moteurs-roues électriques sont représentés par les moteurs électriques 7 et où la partie restante de l'automobile constitue l'armature 40.

Le balayage de signaux de fréquence est réalisé à l'intérieur d'une gamme de fréquences audibles avec des amplitudes prédéterminées pour réaliser le test de vibrations mécaniques sur le véhicule. Le générateur de balayage 23 génère un balayage de signaux de fréquence qui sont combinés avec les signaux de commande générés par le générateur de signal de commande 32 via l'additionneur 34. Bien sûr, pour effectuer un test de vibration, on peut faire en sorte que le signal de commande émis par le générateur 32 soit nul. Le signal de sortie de l'additionneur 34 alimente le régulateur de courant 3 qui produit à son tour des signaux modulés par impulsions de largeur variable PWMa, PWMb et PWMc aussi communément appelés signaux PWM qui sont ensuite envoyés au convertisseur 5 qui convertit les signaux PWM en des signaux triphasés alimentant le moteur électrique 7. Un microphone 29 est prévu pour capter des bruits dus à des vibrations mécaniques générées par le véhicule. Les bruits mesurés permettront de localiser les pièces du véhicule causant lesdits bruits. Le système comprend en outre un appareil de mesure de dB 27 branché au microphone 29 pour indiquer le niveau de bruit présent près du véhicule 15.

Veuillez noter qu'il est important que la machine 7, le convertisseur 5 et le régulateur de courant 3 aient une bande passante suffisamment large pour permettre le passage de fréquences audibles.

La méthode selon ce second mode de réalisation comprend les étapes suivantes de (a) produire un balayage de signaux de fréquence dans une gamme de fréquences audibles avec des amplitudes prédéterminées; (b) appliquer les signaux produits à l'étape (a) à l'entrée d'un amplificateur 4 contrôlant le moteur-roue électrique 7 attaché au véhicule 15; et (c) capter les bruits dus à des vibrations générées par le véhicule au moyen d'un microphone 29 durant le balayage des signaux de fréquence pour localiser les pièces dans le véhicule produisant des vibrations non désirées.

Si l'on se réfère maintenant aux Figures 5 et 6, on montre respectivement une vue de côté partiellement en coupe d'un mode de réalisation d'un moteur-roue électrique en combinaison avec une jante 28, un pneu 32 et une bielle articulée 50; et une vue de face partiellement en coupe du rotor 10 et du stator 6 du moteur-roue électrique montré à la Figure 5. Ce moteur-roue est connu dans l'art et est décrit avec plus de détails dans le brevet américain No. 5,327,0344 de P. Couture et coll. Le moteur-roue décrit dans ce brevet représente, à titre d'exemple seulement, un moteur qui peut constituer une unité apte à vibrer selon la présente invention parce qu'il a une bande passante suffisante pour permettre des vibrations mécaniques à l'intérieur d'une gamme de fréquences audibles. D'autres moteurs électriques peuvent être utilisés s'ils permettent des vibrations mécaniques à l'intérieur d'une gamme de fréquences audibles.

Le moteur-roue électrique comprend un arbre creux 2 ayant une première ouverture à une de ses extrémités et une seconde ouverture. La première ouverture reçoit des conducteurs 4 de l'extérieur du moteur-roue. Le stator 6 est coaxial avec l'arbre 2 et fixé à celui-ci, le stator 6 étant muni de parties creuses 11 et de bobinages 8. Dans la Figure 6, seulement quelques sections de bobinage sont indiquées par le No. 8, mais on doit comprendre qu'il y a des bobinages tout autour du stator 6.

Le rotor 10 est coaxial avec le stator 6 et est monté pour pouvoir tourner autour du stator 6. Le stator 6 comprend des ouvertures formant les parties creuses 11 entre les bras 13 pour réduire son poids. Le moteur-roue est aussi muni d'un système de conversion pour convertir un courant électrique d'entrée en un courant électrique alternatif et variable. Le système de conversion 12 comprend une unité de microprocesseur 44, un convertisseur courant continu/courant alternatif ayant une électronique de puissance 14, monté à l'intérieur des parties creuses 11, des bornes d'entrée 15 pour recevoir le courant électrique d'entrée amené au moyen de conducteurs 4 et des bornes de sortie 16 pour générer le courant électrique alternatif et variable. La fréquence du courant électrique alternatif et variable est représentative d'une vitesse de rotation désirée du rotor 10, l'angle de phase du courant électrique alternatif et variable détermine si le moteur-roue fonctionnera comme un moteur ou comme un générateur et l'amplitude du courant alternatif et variable est représentative du couple désiré.

Le stator 6 comprend une partie centrale attachée à l'arbre 2, des bras 13 s'étendant radicalement à partir de la partie centrale, et une pièce polaire circulaire et périphérique incluant des lames de métal 27 sur laquelle des bobinages 8 sont enroulés. La pièce polaire est fixée aux extrémités périphériques des bras 13.

Le rotor 10 comprend un boîtier ayant une paroi cylindrique 17 ayant une surface interne munie d'un moyen magnétique 26 entourant le stator et séparé de celui-ci par un entrefer. Étant donné que l'entrefer est relativement petit, il ne peut pas être vu sur les figures 5 et 6. Le boîtier comprend une paroi interne 18 disposée sur un côté de la paroi cylindrique 17, et une autre paroi 20 disposée sur l'autre côté de la paroi cylindrique 17. L'arbre 2 se prolonge à travers une partie centrale de la paroi interne 18. La seconde ouverture dudit arbre 2 est ouverte à l'intérieur dudit boîtier.

Le boîtier qui fait partie du rotor 10 enferme de façon étanche l'arbre 2, le stator 6 et le système de conversion 12. Un joint étanche 123 est prévu. Le moteur-roue comprend un premier roulement à bille 22 relié à la paroi interne 18, et un second roulement à bille 24 relié à la paroi externe 20. Les roulements à billes 22 et 24 sont respectivement montés de part et d'autre de l'arbre 2 de façon à ce que le rotor 10 puisse tourner par rapport au stator 6 au moyen des roulements à billes 22 et 24. Un boulon fileté 23 est prévu pour fixer le stator 6 par rapport à l'arbre 2. Un anneau d'arrêt 21 est également prévu. Un anneau de compression 127 est prévu pour fixer le roulement à billes 22.

Dans la Figure 6, on peut voir que le stator 6 comprend quatre bras 13 également espacés. Dans le mode de réalisation montré dans ces figures 5 et 6, le moyen magnétique du rotor 10 comprend une série d'aimants permanents 26. Dans la Figure 6, seulement quelques aimants sont identifiés par le numéro 26, mais on doit comprendre que ces aimants 26 sont prévus tout autour du stator 6. Le stator 6 est fait en partie d'un matériau de poids léger pouvant conduire la chaleur. De préférence, ce matériau est un alliage d'aluminium. Le moteur-roue comprend en outre une jante 28 fixée autour d'une surface externe du boîtier, et une bande 30 faite d'un élastomère et montée entre la jante 28 et le boîtier. La jante 28 est adaptée pour recevoir le pneu 32. La jante 28 est à fond plat. Les aimants 26 sont faits de préférence de néodyme, de fer et de bore. La bande 30 empêche une pénétration d'eau ou de poussière entre le boîtier et la jante 28 pour éviter le débalancement de la roue.

Les extrémités périphériques des bras 13 sont fixées sur la pièce polaire du stator 6 au moyen d'un membre circulaire 34 qui fait partie intégrante des extrémités périphériques des bras 13. Le membre circulaire 34 a sa surface externe munie d'encoches 36. La pièce polaire du stator 6 a une surface interne munie de langues saillantes 37 de forme complémentaire qui sont aptes à coopérer avec les encoches 36 pour fixer la pièce polaire du stator 6 sur le membre circulaire 34. Le membre circulaire 34 a une surface interne munie de parties en saillie 38, ainsi un échange efficace de chaleur peut être obtenu au moyen des parties en saillie 38 lorsqu'une circulation d'air est produite à l'intérieur du boîtier. Seulement quelques parties en saillie sont indiquées par le numéro 38 de façon à ne pas surcharger la Figure 6. Le support du stator 6 et le membre circulaire 34 sont faits d'un alliage d'aluminium tandis que la pièce polaire du stator 6 est faite d'acier.

Il est à noter que les extrémités de la croix formée par les bras 13 du stator 6 sont alignées avec les encoches 36 pour des raisons mécaniques. Ainsi, les parties en saillie 38 qui sont disposées le long du membre circulaire 34 sont, par rapport à leur dimension longitudinale, de préférence déphasées par rapport à l'arbre du moteur-roue, le long de la direction circonférentielle du membre 34 de façon à le renforcer mécaniquement. L'axe central 3 est celui de l'arbre 2.

La section annulaire 58 a des encoches et des parties en saillie de forme complémentaire qui sont adaptées pour coopérer avec des parties en saillie et les encoches correspondantes de la bordure externe du membre annulaire 52. Également, une clé 66 est prévue pour verrouiller l'arbre 2 par rapport à la bielle articulée 50. La bielle articulée 50 est munie d'une fente interne allongée 70 ayant une première extrémité adjacente à la section annulaire 58 et une seconde extrémité éloignée de ladite section annulaire 58, ainsi des conducteurs peuvent être amenés à l'arbre 2 le long de ladite fente allongée 70. On peut voir aussi le joint d'articulation à rotule 100.

La paroi externe du boîtier comprend des sections convexes et concaves 112 et 114 qui alternent le long de sa direction circonférentielle, de telle manière que, lorsque le rotor tourne, une circulation d'air est produite à l'intérieur du boîtier au moyen de la section convexe 112, et une circulation d'air est produite le long des parties externes de la section concave 114.

Un tuyau à air 120 est prévu. Il a une extrémité disposée à l'intérieur du boîtier. Une chambre est disposée à l'extrémité externe du tuyau 120 et un matériau de dessiccation est disposé à l'intérieur de la chambre. Ainsi lorsque le rotor 10 tourne, une circulation d'air est produite à l'intérieur du tuyau 120 et à travers la chambre pour assécher l'air à l'intérieur du boîtier.

Le pneu 32 est fixé à la jante 28 d'une manière permanente lors de l'assemblage du moteur-roue. Le moteur-roue est muni d'une jante à fond plat 28, d'une première bride de côté qui peut être soudée sur la jante 28, et d'une seconde bride de côté, qui est fixée sur la jante 28 au moyen de boulons 146 et d'un membre en forme de L 148 soudé sur la jante 28.

## Revendications

1. Un système motorisé électrique rotatif apte à vibrer comprenant :
un moteur électrique (7) ayant un rotor et un stator, le rotor et le stator formant une unité apte à vibrer ;
un amplificateur de puissance (4) pour alimenter le moteur électrique (7), ayant une sortie de puissance (6) branchée au moteur électrique (7) et une entrée de signal de contrôle (8) pour recevoir un signal de contrôle ; et
un générateur de signal (11) pour générer le signal de contrôle, le signal de contrôle ayant une composante continue pour faire tourner le rotor par rapport au stator, et une composante alternative pour faire vibrer le moteur électrique (7) ;
le système motorisé électrique étant **caractérisé en ce que** l'unité apte à vibrer a une première bande passante permettant des vibrations mécaniques à l'intérieur d'une gamme de fréquences audibles, l'amplificateur de puissance (4) et le générateur de signal (11) ont respectivement des bandes passantes qui incluent la première bande passante, le moteur électrique (7) est un moteur-roue électrique synchrone à aimants permanents pour un véhicule, et l'amplificateur de puissance (4) comprend un régulateur de courant (3) et un convertisseur (5).

2. Un système selon la revendication 1, dans lequel le générateur de signal comprend un générateur de balayage (23) pour générer un signal de contrôle incluant un balayage de signaux de fréquence dans la gamme de fréquences audibles avec des amplitudes prédéterminées pour produire un test de vibrations mécaniques sur le véhicule.

3. Un système selon la revendication 2, comprenant en outre un microphone (29) pour capter un bruit produit par le véhicule pour ainsi permettre de localiser des pièces du véhicule causant ledit bruit.

4. Méthode pour faire fonctionner un moteur électrique (7) ayant un rotor et un stator, le rotor et le stator formant une unité apte à vibrer, la méthode comprenant les étapes suivantes :
(a) alimenter le moteur électrique (7) par un amplificateur de puissance (4) ayant une sortie de puissance (6) branchée au moteur électrique (7) et une entrée de signal de contrôle (8) pour recevoir un signal de contrôle ; et
(b) générer au moyen d'un générateur de signal (11) le signal de contrôle, le signal de contrôle ayant une composante continue pour faire tourner le rotor par rapport au stator, et une composante alternative pour faire vibrer le moteur électrique (7);
la méthode étant **caractérisée en ce que** l'unité apte à vibrer à une première bande passante permettant des vibrations mécaniques à l'intérieur d'une gamme de fréquences audibles, l'amplificateur de puissance (4) de l'étape a) et le générateur de signal (11) de l'étape b) ont respectivement des bandes passantes qui incluent la première bande passante, le moteur électrique (7) est un moteur-roue électrique synchrone à aimants permanents, et l'amplificateur de puissance (4) de l'étape a) comprend un régulateur de courant (3) et un convertisseur (5).

5. Une méthode selon la revendication 4, dans laquelle le signal de contrôle généré à l'étape (b) comprend un balayage de signaux de fréquence dans la gamme de fréquences audibles avec des amplitudes prédéterminées pour réaliser un test de vibrations mécaniques sur le véhicule.

6. Une méthode selon la revendication 5, comprenant en outre l'étape de capter un bruit généré par le véhicule pour localiser des pièces du véhicule causant par ledit bruit.

## Claims

1. A rotating electric motor system capable of vibrating comprising:
an electric motor (7) having a rotor and a stator, the rotor and the stator forming a unit capable of vibrating;
a power amplifier (4) for powering the electric motor (7), having a power output (6) connected to the electric motor (7) and a control signal input (8) for receiving a control signal; and
a signal generator (11) for generating the control signal, the control signal having a continuous component for rotating the rotor with respect to the stator, and an alternating component for vibrating the electric motor (7);
the electric motor system being caracterized in that the unit capable of vibrating has a first bandwidth allowing mechanical vibrations within an audible frequency range, the power amplifier (4) and the signal generator (11) have respective bandwidths including the first bandwidth, the electric motor (7) is a synchronous electric motor-wheel with permanent magnets for a vehicle, and the power amplifier (4) comprises a current regulator (3) and an inverter (5).

2. A system according to claim 1, wherein the signal generator comprises a scanning generator (23) for generating a control signal including a scan of frequency signals within the audible frequency range with predetermined amplitudes for producing a mechanical vibration test on the vehicle.

3. A system according to claim 2, further comprising a microphone (29) for picking up a noise produced by the vehicle for thereby locating parts of the vehicle causing said noise.

4. A method for operating a rotating electric motor (7) having a rotor and a stator, the rotor and the stator forming a unit capable of vibrating, the method comprising the steps of:
(a) powering the electric motor (7) with a power amplifier (4) having a power output (6) connected to the electric motor (7) and a control signal output (8) for receiving a control signal; and
(b) generating with a signal generator (11) the control signal, the control signal having a continuous component for rotating the rotor with respect to the stator, and an alternating component for vibrating the electric motor (7);
the method being caracterized in that the unit capable of vibrating has a first bandwidth allowing mechanical vibrations within an audible frequency range, the power amplifier (4) of step a) and the signal generator (11) of step b) have respective bandwidths including the first bandwidth, the electric motor (7) is a synchronous electric motor-wheel with permanent magnets for a vehicle, and the power amplifier (4) of step a) comprises a current regulator (3) and an inverter (5).

5. A method according to claim 4, wherein the control signal generated in step (b) comprises a scanning of frequency signals within the audible frequency range with predetermined amplitudes for achieving a mechanical vibration test on the vehicle.

6. A method according to claim 5, further comprising the step of picking up a noise generated by the vehicle for locating parts of the vehicle causing said noise.

## Patentansprüche

1. Rotierendes elektrisches Motoranthebssystem, das schwingen kann und umfasst:
einen Elektromotor (7), der einen Rotor und einen Stator besitzt, wobei der Rotor und der Stator eine schwingfähige Einheit bilden;
einen Leistungsverstärker (4), der den Elektromotor (7) speist und einen mit dem Elektromotor (7) verbundenen Leistungsausgang (6) sowie einen Steuersignaleingang (8), der ein Steuersignal empfängt, besitzt; und
einen Signalgenerator (11), der das Steuersignal erzeugt, das eine Gleichstromkomponente zum Drehen des Rotors relativ zum Stator sowie eine Wechselstromkomponente zum Versetzen des Elektromotors (7) in Schwingungen besitzt;
wobei das elektrische Motorantriebssystem **dadurch gekennzeichnet ist, dass** die schwingfähige Einheit ein erstes Durchlassband besitzt, das in einem Bereich hörbarer Frequenzen mechanische Schwingungen ermöglicht, der Leistungsverstärker (4) und der Signalgenerator (11) Durchlassbänder besitzen, die das erste Durchlassband enthalten, der Elektromotor (7) ein synchroner elektrischer Radmotor mit Permanentmagneten für ein Fahrzeug ist und der Leistungsverstärker (4) einen Stromregler (3) und einen Umsetzer umfasst.

2. System nach Anspruch 1, bei dem der Signalgenerator einen Wobbelgenerator (23) umfasst, um ein Steuersignal zu erzeugen, einschließlich eines Wobbelns der Signale mit einer Frequenz im Bereich hörbarer Frequenzen mit vorgegebenen Amplituden, um an dem Fahrzeug eine Prüfung mit mechanischen Schwingungen zu erzeugen.

3. System nach Anspruch 2, das außerdem ein Mikrophon (29) umfasst, um ein Geräusch aufzunehmen, das vom Fahrzeug erzeugt wird, um somit jene Teile des Fahrzeugs, die das Geräusch erzeugen, lokalisieren zu können.

4. Verfahren zum Betreiben eines Elektromotors (7), der einen Rotor und einen Stator besitzt, wobei der Rotor und der Stator eine schwingfähige Einheit bilden und wobei das Verfahren die folgenden Schritte umfasst:
(a) Speisen des Elektromotors (7) mit einem Leistungsverstärker (4), der einen mit dem Elektromotor (7) verbundenen Leistungsausgang (6) und einen Steuersignaleingang (8) zum Empfangen eines Steuersignals besitzt; und
(b) Erzeugen des Steuersignals mittels eines Signalgenerators (11), wobei das Steuersignal eine Gleichstromkomponente zum Drehen des Rotors relativ zum Stator und eine Wechselstromkomponente zum Versetzen des Elektromotors (7) in Schwingungen besitzt;
wobei das Verfahren **dadurch gekennzeichnet ist, dass** die schwingfähige Einheit ein erstes Durchlassband besitzt, das mechanische Schwingungen in einem Bereich hörbarer Frequenzen ermöglicht, der Leistungsverstärker (4) des Schrittes a) und der Signalgenerator (11) des Schrittes b) jeweils Durchlassbänder besitzen, die das erste Durchlassband enthalten, der Elektromotor (7) ein synchroner elektrischer Radmotor mit Permanentmagneten ist und der Leistungsverstärker (4) des Schrittes a) einen Stromregler (3) und einen Umsetzer (5) umfasst.

5. Verfahren nach Anspruch 4, bei dem das im Schritt (b) erzeugte Steuersignal ein Wobbeln von Signalen mit einer Frequenz im Bereich hörbarer Frequenzen und mit vorgegebenen Amplituden umfasst, um an dem Fahrzeug eine Prüfung mit mechanischen Schwingungen auszuführen.

6. Verfahren nach Anspruch 5, das außerdem den Schritt umfasst, bei dem ein vom Fahrzeug erzeugtes Geräusch aufgenommen wird, um jene Teile des Fahrzeugs, die das Geräusch verursachen, zu lokalisieren.
